# FASCICULE DE BREVET EUROPEEN

(11) **EP 2 991 531 B1**
(45) Date de publication et mention de la délivrance du brevet: **15.05.2019**
(21) Numéro de dépôt: 14732256.4
(22) Date de dépôt: 29.04.2014
(51) Int. Cl.: A47J 36/02

(54) **RÉCIPIENT DE CUISSON ANTIADHÉSIF**
NICHTHAFTENDER KOCHBEHÄLTER
NON-STICK COOKING CONTAINER

(30) Priorité: 03.05.2013 CN 201310160536
(43) Date de publication de la demande: 09.03.2016
(73) Titulaire: SEB S.A., 69130 Ecully (FR)
(72) Inventeur: FU, Ji Qiang, Wuhan Hubei 430051 (CN); QU, Yi Sheng, Wuhan Hubei 430051 (CN); CHEN, Jun, Wuhan Hubei 430051 (CN)
(74) Mandataire: Rivière, Sophie
(86) Numéro de dépôt international: PCT/FR2014/051024
(87) Numéro de publication internationale: WO 2014/177804

(56) Documents cités:
- EP-A1- 0 510 546
- EP-A1- 0 560 675
- EP-A1- 0 594 374
- CN-A- 102 641 078

## Description

### Domaine technique

La présente invention relève du domaine des ustensiles de cuisine, et se rapporte aux récipients de cuisson antiadhésifs.

Les récipients de cuisson antiadhésifs comprennent notamment les poêles, les woks, les casseroles, les faitouts.

### Technique antérieure

A l'heure actuelle, les récipients de cuisson antiadhésifs existants sont généralement des récipients de cuisson à fond plat traité par sablage ou grenaillage, puis par pulvérisation d'un revêtement antiadhésif. Le revêtement antiadhésif des produits traités selon cette méthode a tendance à se rayer, à s'écailler et à s'user, par conséquent la durée de vie de ces produits s'en trouve écourtée.

Le modèle d'utilité chinois n° CN2369590Y propose un type de récipient de cuisson antiadhésif rigide et résistant, qui comprend un centre rond et des cercles ou striures concentriques qui s'étendent jusqu'au bord du récipient de cuisson ; la surface transversale du récipient de cuisson comporte des ondulations en dents de scie, la surface transversale du récipient de cuisson se composant de crêtes, de creux, et de flancs. La surface du récipient de cuisson est recouverte d'une couche antiadhésive de Téflon®.

Bien que le récipient de cuisson antiadhésif susmentionné rallonge jusqu'à un certain point la durée de vie du revêtement antiadhésif, le revêtement recouvrant la crête des dents de scie est aisément rayable et écaillable en raison de l'utilisation de la structure ondulée en dents de scie telle que décrite plus haut. L'écaillage de cette partie du revêtement antiadhésif entraîne l'écaillage des creux des ondulations alentours, puis l'apparition de vastes zones écaillées, ce qui écourte en conséquence la durée de vie de ce revêtement.

Le document EP0259056 divulgue un récipient de cuisson antiadhésif présentant une surface intérieure nervurée recouverte d'un revêtement antiadhésif. Toutefois les nervures présentent également un profil en dent de scie.

Le document EP0510546 divulgue un récipient de cuisson antiadhésif présentant un revêtement antiadhésif déposé sur une couche intermédiaire rugueuse réalisée par pulvérisation plasma sur une surface nervurée. La surface nervurée présente des rainures qui peuvent être obtenues par moletage, notamment par moletage de rainures croisées. L'obtention d'un tel récipient s'avère relativement complexe. Le document CN102641078A décrit également un récipient de cuisson.

### Exposé de l'invention

La présente invention se propose de fournir un récipient de cuisson antiadhésif dont la durée de vie du revêtement antiadhésif est efficacement rallongée.

Afin de réaliser l'objectif précité, la présente invention fournit un récipient de cuisson antiadhésif selon la revendication 1.

Avantageusement alors, les surfaces de sommet des nervures sont plates ou cambrées et les surfaces de fond des rainures sont plates ou cambrées. Avantageusement encore, les parois latérales des nervures sont plates ou cambrées.

Avantageusement encore, deux nervures voisines sont séparées par un intervalle faisant entre 0,3 mm et 1 mm.

Avantageusement encore, le rapport entre la largeur des nervures et l'intervalle est compris entre 1/3 et 1/2.

Selon l'invention, l'angle de séparation entre les deux parois latérales d'une même nervure est un angle aigu.

Selon l'invention, l'angle de séparation est compris entre 25° et 45°. Avantageusement encore, la distance verticale séparant le point le plus haut de la surface de sommet d'une nervure et le point le plus bas de la surface de fond d'une rainure est comprise entre 0,12 mm et 0,45 mm.

Avantageusement encore, la rugosité de la surface des nervures est comprise entre 3 µm et 8 µm.

Avantageusement encore, les surfaces de sommet des nervures et les parois latérales des nervures présentent des conformations concaves et sont ainsi conformées de manière à former un espace concave rugueux. Avantageusement encore, une couche d'oxydation anodique est disposée entre la surface des nervures et des rainures, d'une part, et le revêtement antiadhésif, d'autre part.

Dans le plan technique de la présente invention, la surface intérieure du corps du récipient de cuisson présente une zone nervurée ; cette zone nervurée comporte de nombreuses nervures et rainures, la surface des nervures et des rainures est recouverte d'un revêtement antiadhésif. Les nervures ont pour rôle de renforcer la résistance à l'usure et de protéger le récipient de cuisson, ainsi, durant l'utilisation du récipient de cuisson, les spatules entrent uniquement en contact avec le revêtement antiadhésif au niveau des nervures, et le revêtement antiadhésif se trouvant dans le fond des rainures est protégé de manière efficace et n'aura pas tendance à être rayé ni à s'écailler, ce qui permettra de conserver durablement les propriétés antiadhésives du récipient de cuisson. Dans la présente invention, les nervures ont une surface de sommet. Par rapport aux structures ondulées en dents de scie des techniques courantes, d'une part le revêtement antiadhésif adhère mieux sur les surfaces de sommet des nervures, et, durant l'utilisation du récipient de cuisson, le revêtement antiadhésif n'a pas tendance à s'écailler ; même lorsque le revêtement antiadhésif des surfaces de sommet des nervures s'écaille, cela n'affecte pas le revêtement antiadhésif se trouvant dans le fond des rainures ; d'autre part, il est plus aisé de garantir l'épaisseur du revêtement antiadhésif des surfaces de sommet des nervures, ce qui améliore l'homogénéité de la surface antiadhésive. Par ailleurs, les nervures dotées de surfaces de sommet sont plus résistantes, elles sont peu sujettes à l'usure ou à la rupture, et elles jouent de manière efficace un rôle de renforcement et de protection du récipient de cuisson. Dans la présente invention, les rainures ont une surface de fond. La surface de fond des rainures ne présente pas d'angle aigu, le revêtement antiadhésif y circule librement et remplit le fond de manière plane et uniforme lors de la pulvérisation du revêtement ; aucun pore d'air n'apparaît après le frittage, ce qui rend le revêtement antiadhésif davantage consistant, et donc plus solide et résistant à la corrosion.

### Brève description des dessins

Une partie des dessins annexes de la description de la présente invention servent à illustrer de manière plus avancée la présente invention. Les exemples d'application schématiques et leurs légendes ont pour fonction d'expliquer la présente invention et ne constituent en aucun cas une restriction inadéquate à la présente invention. Dans les dessins annexés :
- la figure 1 est une coupe transversale d'un exemple de réalisation d'un récipient de cuisson antiadhésif conforme à la présente invention.
- la figure 2 est un agrandissement de la partie A du récipient de cuisson antiadhésif représenté sur la figure 1 ; le revêtement antiadhésif n'étant pas représenté sur la figure 2.
- la figure 3 est un schéma partiel du récipient de cuisson antiadhésif représenté sur la figure 1, le revêtement antiadhésif étant représenté sur la figure 3.
- la figure 4 est un schéma partiel du récipient de cuisson antiadhésif représenté sur la figure 1, le revêtement antiadhésif n'étant pas représenté sur la figure 4.
- la figure 5 est un schéma partiel d'un deuxième exemple de réalisation d'un récipient de cuisson antiadhésif conforme à la présente invention, le revêtement antiadhésif étant représenté sur la figure 5.

Les figures susmentionnées comportent les légendes suivantes : 10 = corps de récipient; 21 = nervure; 22 = rainure; 211 = surface de sommet d'une nervure; 212 = paroi latérale d'une nervure; 221 = surface de fond d'une rainure ; 22a = conformations concaves ; 30 = revêtement antiadhésif.

### Description détaillée de modes de réalisation de l'invention

Il faut préciser qu'en l'absence de tout conflit, les exemples de réalisation de la présente demande et les spécificités de ces exemples de réalisation peuvent se combiner mutuellement. On s'est dans la suite du texte référé aux dessins annexes en y associant des exemples de réalisation pour illustrer plus en détail la présente invention.

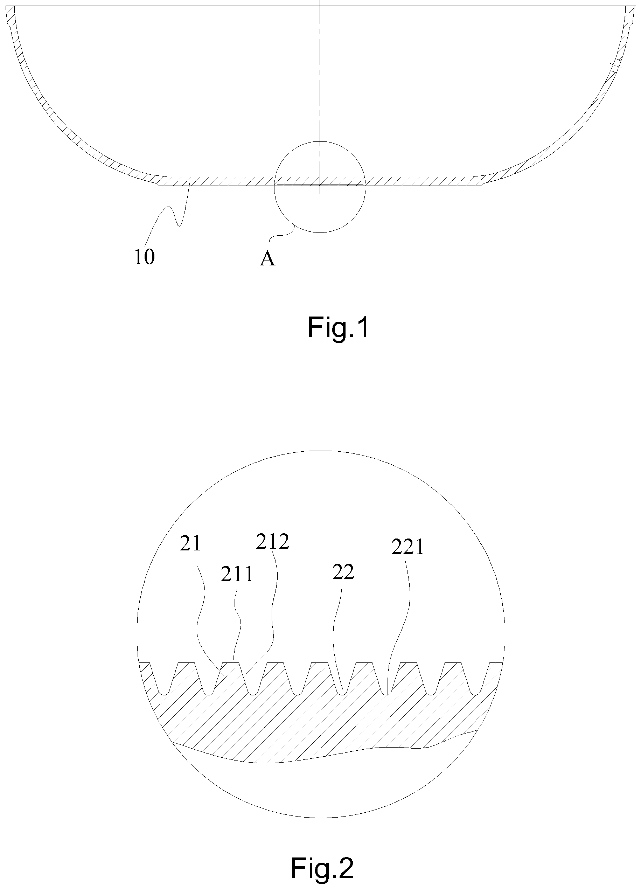

Comme cela est indiqué sur les figures 1 à 3, le récipient de cuisson antiadhésif du premier exemple de réalisation comporte un corps de récipient 10, la surface intérieure du corps de récipient 10 comporte une zone de circonvolutions, de nombreuses nervures 21 et rainures 22 sont disposées à intervalles réguliers pour former les circonvolutions, une couche de revêtement antiadhésif 30 recouvre les surfaces des nervures 21 et des rainures 22. Les nervures 21 ont pour rôle de renforcer la résistance à l'usure et de protéger le récipient de cuisson, ainsi, durant l'utilisation du récipient de cuisson, les spatules entrent uniquement en contact avec le revêtement antiadhésif 30 au niveau des nervures 21, et le revêtement antiadhésif 30 se trouvant dans le fond des rainures 22 est protégé de manière efficace et n'aura pas tendance à être rayé ni à s'écailler, ce qui permet de conserver durablement les propriétés antiadhésives du récipient de cuisson.

Dans le premier exemple de réalisation, les nervures 21 ont une surface de sommet 211. Par rapport aux structures ondulées en dents de scie des techniques courantes, d'une part le revêtement antiadhésif 30 adhère mieux sur les surfaces de sommet 211 des nervures 21, et, durant l'utilisation du récipient de cuisson, le revêtement antiadhésif 30 n'a pas tendance à s'écailler ; même lorsque le revêtement antiadhésif 30 des surfaces de sommet 211 s'écaille, cela n'affecte pas le revêtement antiadhésif 30 se trouvant dans le fond des rainures 22 ; d'autre part, il est plus aisé de garantir l'épaisseur du revêtement antiadhésif 30 des surfaces de sommet 211 des nervures 21, ce qui améliore l'homogénéité du revêtement antiadhésif 30. Par ailleurs, les nervures 21 dotées de surfaces de sommet 211 sont plus résistantes, elles sont peu sujettes à l'usure ou à la rupture, et elles jouent de manière efficace un rôle de renforcement et de protection du récipient de cuisson.

Dans les techniques existantes, le fond des rainures 22 présente un angle aigu ; lorsqu'on pulvérise le revêtement antiadhésif 30, celui-ci a du mal à y circuler librement, et après le frittage, des pores d'air ont tendance à apparaître au niveau de l'angle aigu. En d'autres termes, le fond des rainures peut être dépourvu de revêtement antiadhésif. Or, dans le premier exemple de réalisation, les rainures 22 ont une surface de fond 221, la surface de fond des rainures 22 ne présente pas d'angle aigu, le revêtement antiadhésif y circule librement et remplit le fond de manière plane et uniforme lors de la pulvérisation du revêtement antiadhésif ; aucun pore d'air n'apparaît après le frittage, ce qui rend le revêtement antiadhésif 30 davantage consistant, et donc plus solide et résistant à la corrosion.

La zone de circonvolutions susmentionnée peut être obtenue par le traitement de la surface intérieure du corps de récipient 10. Une surface intérieure nervurée est ainsi obtenue. Bien entendu, les experts dans ce domaine technique savent que la présente invention ne se limite pas à cette zone de circonvolutions, et qu'une simple zone nervurée suffit. La zone nervurée précitée peut également être une zone concentrique, ou encore une zone de lignes droites/courbes régulières et parallèles ; le principe et la fonction de cette zone concentrique ou de lignes droites/courbes régulières et parallèles sont similaires à ceux de la zone de circonvolutions ; ce sujet ne sera pas abordé ici plus en détails.

Par ailleurs, la zone nervurée susmentionnée peut recouvrir toute la surface intérieure du corps de récipient, ou bien uniquement le fond du récipient de cuisson, ou encore le fond du récipient de cuisson et une partie des parois du récipient de cuisson.

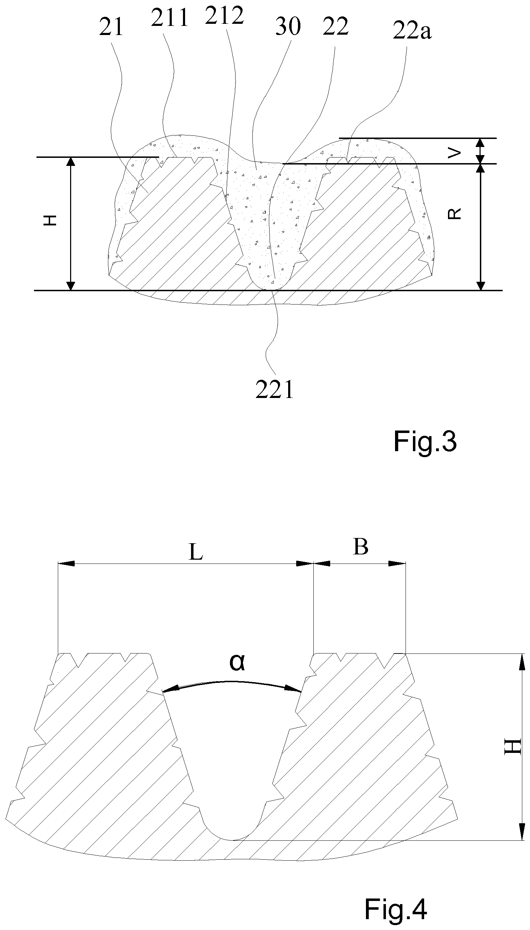

Comme cela est indiqué sur la figure 3, dans le premier exemple de réalisation les surfaces de sommet 211 ont une surface plate et les parois latérales 212 des nervures 21 sont plates ; autrement dit la section transversale des nervures 21 présente une forme trapézoïdale, et la surface de fond 221 des rainures est cambrée. La structure précitée permet au revêtement antiadhésif 30 de circuler librement et de recouvrir la surface de manière plane et uniforme sans laisser de pores d'air, ce qui améliore la consistance et l'adhésion du revêtement antiadhésif. L'espace entre les surfaces de sommet 211 et les parois latérales 212 des nervures 21 aura de préférence la forme d'un angle en biseau.

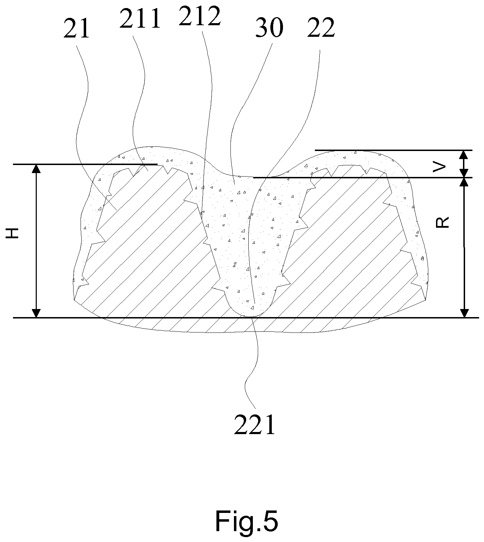

Comme cela est indiqué sur la Figure 5, la différence entre le deuxième exemple de réalisation et le premier exemple de réalisation réside uniquement dans le fait que les surfaces de sommet 211 des nervures 21 sont cambrées dans le deuxième exemple de réalisation. Tel que bien visible sur la figure 5, les surfaces de sommet 211 des nervures 21 sont bombées vers l'extérieur. Les experts dans ce domaine technique savent que, pour que le mode de réalisation soit réalisable, les surfaces de sommet 211 des nervures 21 peuvent également posséder une structure autre que cambrée, les surfaces de fond 221 des rainures 22 peuvent également être plates, et les parois latérales 212 des nervures 21 peuvent également être cambrées.

Comme cela est indiqué sur les Figures 2 et 4, les intervalles L entre deux nervures 21 voisines de la zone nervurée seront de préférence égaux, c'est-à-dire que les nervures seront distribuées de manière uniforme sur le fond du corps de récipient 10 depuis le centre vers l'extérieur. Les intervalles L précités entre les nervures 21 doivent être relatifs à la surface de contact entre la spatule et la surface intérieure du corps de récipient 10 durant la cuisson des aliments, de façon à ce que la spatule ne puisse pas rayer le fond des rainures 22 rempli de revêtement antiadhésif 30, et ne puisse pas non plus écailler entièrement le revêtement antiadhésif 30 de la surface des nervures 21. Comme cela est indiqué sur la figure 4, dans le premier exemple de réalisation, les inventeurs ont, suite à d'incessantes études et expérimentations, déterminé que le meilleur intervalle L possible entre deux nervures 21 voisines est compris entre 0,3 mm et 1 mm. Lorsque l'intervalle L est inférieur à 0,3 mm, le revêtement antiadhésif 30 flotte à la surface, et ne remplit pas efficacement les rainures 22, aussi devient-il aisément rayable par les spatules. Lorsque l'intervalle L est supérieur à 1 mm, les spatules peuvent entrer dans les rainures 22, et rayer le revêtement antiadhésif 30.

Comme cela est indiqué sur les Figures 3 et 4, les inventeurs ont, suite à d'incessantes études et expérimentations, déterminé que le meilleur rapport entre la largeur B des nervures 21 et l'intervalle L est compris entre 1/3 et 1/2. Lorsque le rapport entre la largeur B des nervures 21 et l'intervalle L est inférieur à 1/3, les nervures 21 ne sont pas suffisamment solides et ont tendance à être rayées ou à se rompre. Lorsque le rapport entre la largeur B des nervures 21 et l'intervalle L est supérieur à 1/2, après que le revêtement antiadhésif 30 des nervures 21 a été usé suite à l'utilisation du récipient de cuisson, la surface mise à nu du récipient de cuisson est relativement importante et les propriétés antiadhésives du récipient de cuisson diminuent rapidement. Tel que bien visible sur les figures 3 et 4, l'intervalle L inclut la largeur B au niveau de la surface de sommet d'une nervure 21 ainsi que l'espace entre les surfaces de sommet 211 de deux nervures 21 adjacentes.

Lorsque l'intervalle L entre les nervures 21 est compris entre 0,3 mm et 1 mm, et que rapport entre la largeur B des nervures 21 et l'intervalle L est compris entre 1/3 et 1/2, après le recouvrement par le revêtement antiadhésif 30, on peut encore observer à l'oeil nu les nervures de la surface intérieure du corps de récipient 10.

Comme cela est indiqué sur les Figures 2 et 4, l'angle de séparation α entre les deux parois latérales 212 d'une même nervure 21 est un angle aigu. Les inventeurs ont, suite à d'incessantes études et expérimentations, déterminé que l'angle de séparation α doit être compris entre 25° et 45° pour obtenir les meilleurs résultats.

Comme cela est indiqué sur les Figures 3 et 4, les inventeurs ont, suite à d'incessantes études et expérimentations, déterminé que la distance verticale H optimum séparant le point le plus haut de la surface de sommet 211 d'une nervure 21 et le point le plus bas de la surface de fond 221 d'une rainure 22 est comprise entre 0,12 mm et 0,45 mm. Lorsque la distance verticale H est inférieure à 0,12 mm, il est impossible de former un point de support efficace. Lorsque la distance verticale H est supérieure à 0,45 mm, le revêtement antiadhésif circule mal et à tendance à ne pas pénétrer à l'intérieur des rainures 22, et, durant l'utilisation du récipient de cuisson les saletés accumulées à l'intérieur des rainures 22 sont difficilement nettoyables.

On aura de préférence une rugosité Ra de la surface des nervures 21 comprise entre 3 µm et 8 µm. Cette rugosité de surface peut être obtenue par sablage ou par un autre procédé de rugosification (par ex. le grenaillage, la corrosion chimique ou la corrosion électrochimique, etc.). La rugosité de surface précitée permet de garantir une excellente adhésion et solidité du revêtement antiadhésif 30.

On aura de préférence, comme cela est indiqué sur la figure 3, des surfaces de sommets 211 des nervures 21 et des parois latérales 212 des nervures 21 présentant des conformations concaves 22a conformées de manière à former un espace concave rugueux. Ces conformations concaves 22a permettent d'agrandir la surface d'adhésion et de garantir une excellente adhésion et solidité du revêtement antiadhésif 30.

Tel que bien visible sur les figures 3 et 5, l'épaisseur du revêtement antiadhésif 30 sur la surface de fond 221 d'une rainure 22 est supérieure à l'épaisseur du revêtement antiadhésif 30 sur la surface de sommet 211 d'une nervure 21 adjacente.

Tel que bien visible sur les figures 3 et 5, la distance verticale H séparant le point le plus haut de la surface de sommet 211 d'une nervure 21 et le point le plus bas de la surface de fond 221 d'une rainure 22 adjacente est plus importante que la variation d'altitude V de la surface du revêtement antiadhésif 30 entre la surface de sommet 211 de ladite nervure 21 et la surface de fond 221 de ladite rainure 22.

Tel que bien visible sur les figures 3 et 5, l'épaisseur R du revêtement antiadhésif 30 sur la surface de fond 221 d'une rainure 22 est plus importante que la variation d'altitude V de la surface du revêtement antiadhésif 30 entre la surface de fond 221 de ladite rainure 22 et la surface de sommet 211 d'une nervure 21 adjacente.

Tel que bien visible sur les figures 3 et 5, la distance verticale H séparant le point le plus haut de la surface de sommet 211 d'une nervure 21 et le point le plus bas de la surface de fond 221 d'une rainure 22 adjacente est plus importante que l'épaisseur R du revêtement antiadhésif 30 sur la surface de fond 221 de ladite rainure 22.

Tel que bien visible sur les figures 3 et 5, la paroi latérale 212 d'une nervure 21 et la surface de fond 221 d'une rainure 22 adjacente sont reliées par une paroi arrondie.

On aura de préférence, disposé une couche d'oxydation anodique entre la surface des nervures 21 et des rainures 22 dont il est question et le revêtement antiadhésif 30. Ainsi une couche d'oxydation anodique est disposée entre la surface des nervures 21 et des rainures 22, d'une part, et le revêtement antiadhésif 30, d'autre part. Cette couche d'oxydation anodique est constituée avant l'étape de pulvérisation du revêtement antiadhésif 30, par le procédé d'anodisation dure, lequel procédé confère aux nervures 21 une certaine rigidité et une bonne résistance à l'usure et à la rupture. L'épaisseur de la couche d'oxydation anodique est de préférence comprise entre 20 µm et 45 µm, pour une dureté comprise de préférence entre 150 Hv et 600 Hv. Afin de garantir les effets antiadhésifs, l'épaisseur du revêtement antiadhésif 30 est de préférence comprise entre 15 µm et 50 µm.

On a réuni ci-après des exemples d'application concrets pour expliquer de manière plus avancée les résultats bénéfiques de la présente invention.

Le récipient de cuisson antiadhésif des exemples d'application 1 à 9 et des exemples comparatifs 1 à 8 est obtenu par les procédés de fabrication suivants :
1. Moulage du corps de récipient : le corps de récipient est constitué par le moulage sous pression d'un alliage d'aluminium, de manière à former un fond cambré ou plat ; après un nettoyage il est soumis à une étape de frittage. Ainsi le corps de récipient 10 est réalisé en alliage d'aluminium moulé.
2. Zone de circonvolutions : les circonvolutions sont produites conformément aux paramètres figurant dans le tableau 1 ; la zone de circonvolutions est disposée sur l'ensemble de la surface intérieure du corps de récipient ; la coupe transversale des nervures des circonvolutions présente une forme trapézoïdale, et le fond des rainures est cambré.
3. Sablage ; un sable émeri de 46# est utilisé pour le sablage, qui permet d'obtenir pour la surface des nervures une rugosité Ra de 5 µm.
4. Anodisation dure : après les étapes de traitement susmentionnées, le corps de récipient est soumis à un traitement par anodisation dure, qui produit une couche anodique de 30 µm d'épaisseur et de 350 Hv de dureté.
5. Pulvérisation du revêtement antiadhésif : on pulvérise sur la surface intérieure du corps de récipient un revêtement antiadhésif à base de résine fluorée, qui forme une couche de 35 µm d'épaisseur ; une fois la pulvérisation terminée, la surface est soumise à une phase de frittage de 6 minutes à 380°C.

On soumet le récipient de cuisson antiadhésif obtenu dans les exemples d'application 1 à 9 et les exemples comparatifs 1 à 8 à des mesures effectuées selon la méthode de test de simulation d'accélération ; pour les performances Cf. tableau 1.

La méthode de test consiste à simuler le mécanisme de détérioration du revêtement antiadhésif durant un usage courant du récipient de cuisson par le consommateur pour la cuisson des aliments, en reflétant les habitudes de cuisson du consommateur chinois, et en y ajoutant des tests renforcés de simulation mécanique, ceci afin d'évaluer la durée de vie du revêtement antiadhésif du récipient de cuisson ; le nombre de cycles des tests de simulation d'accélération étant pris comme critère d'évaluation. La méthode d'évaluation de la durée de vie et des propriétés du revêtement antiadhésif du récipient de cuisson et la méthode de test de simulation d'accélération sont les suivantes :

### I. Méthode d'évaluation de la durée de vie du revêtement antiadhésif :

On cuit un oeuf à la fin de chaque cycle de test de simulation d'accélération, pour procéder à une évaluation de niveau. Si, lors de la cuisson de l'oeuf la surface écaillée du revêtement antiadhésif a un diamètre supérieur à 6 mm, ou si la couche antiadhésive comporte plus de 10 rayures profondes qui la traversent, on arrête le test, et on consigne le nombre de cycles de tests de simulation. Plus le nombre de cycles est important, plus la durée de vie du revêtement antiadhésif est longue.

### II. Méthode d'évaluation des propriétés du revêtement antiadhésif :

La méthode d'évaluation des propriétés du revêtement antiadhésif comporte les étapes suivantes :
A la fin de chaque cycle de tests de simulation, on nettoie l'échantillon, puis on essuie l'eau restée sur la surface.

On applique de manière uniforme une couche d'huile alimentaire sur la surface intérieure du corps de récipient préalablement séchée, à l'aide d'une éponge ou d'un autre objet souple, en évitant que ne se forment des gouttes ou des accumulations d'huile.

On chauffe le récipient de cuisson ainsi huilé sur une gazinière à une température comprise entre 140 et 170°C.

On casse un oeuf que l'on verse sur le récipient de cuisson chaud et on attend que l'oeuf ait coagulé ; on retire l'oeuf du récipient de cuisson, on évalue au travers de cette action les propriétés antiadhésives du récipient de cuisson, puis on les consigne.

### III. Méthode de test de simulation d'accélération :

On utilise pour les tests de simulation d'accélération une spatule en bois. Les tests se déroulent de la manière suivante :
Etape A : test d'usure par vibration de coquillages
Etape B : cuisson d'une mixture composée de divers assaisonnements
Etape C : test d'usure par fils d'acier
Etape D : friture de pommes de terre
Etape E : évaluation des propriétés antiadhésive par la cuisson d'un oeuf

La fin des 4 étapes de test + 1 étape d'évaluation des propriétés antiadhésives ci-dessus correspondent à la réalisation d'un cycle.

### A propos de l'étape A: test d'usure par vibration de coquillages :

Instrument de mesure : appareil de test d'usure par vibration.

### Description concrète de ce test :

(1) On met 500 g de coquillages dans le récipient de cuisson antiadhésif, et on scelle l'ouverture avec du ruban adhésif aluminium.
(2) On place le récipient de cuisson antiadhésif dans un four à infrarouge ou d'un autre type.
(3) On configure l'appareil de test pour vibrer pendant 15 minutes, à une température comprise entre 150 et 180 °C, avec une vitesse de rotation de 400 tours/minute.
(4) On appuie sur le bouton de démarrage de la vibration pour faire vibrer les coquillages pendant 15 minutes dans le récipient de cuisson antiadhésif.
(5) Une fois le test terminé, on retire les coquillages du récipient de cuisson antiadhésif et on le nettoie correctement à l'aide d'eau du robinet.

A propos de l'étape B : cuisson d'une mixture composée de divers assaisonnements :
Ingrédients : huile de soja, vinaigre, sel, sucre, sauce épicée de Guilin, ketchup.

### Description concrète de ce test :

(1) On prépare la mixture en question selon les proportions suivantes : eau du robinet 70%, huile de soja 5%, vinaigre 5%, sel 5%, sucre 5%, sauce épicée de Guilin 5%, ketchup 5% que l'on mélange de manière à obtenir une mixture homogène.
(2) On prélève 1800 ml de cette mixture que l'on verse dans le récipient de cuisson antiadhésif ; on place le récipient de cuisson sur une gazinière ; si le liquide ne couvre pas entièrement le fond du récipient de cuisson on peut en rajouter en conséquence.
(3) On fait chauffer la mixture jusqu'à ébullition, et on laisse bouillir pendant 30 minutes. On peut pendant ce temps, verser à intervalle régulier de l'eau dans la mixture pour maintenir l'épaisseur et la stabilité du liquide.
(4) Une fois le temps de cuisson terminé, on retire la mixture, et on nettoie le récipient de cuisson avec de l'eau du robinet.

### A propos de l'étape C: Test d'usure par fils d'acier :

Instrument de test : Machine d'essai d'abrasion et d'usure équipée d'un dispositif muni de fils d'acier

### Description concrète de ce test :

(1) On verse une quantité appropriée d'huile alimentaire dans le récipient de cuisson antiadhésif.
(2) On chauffe le récipient de cuisson sur une gazinière, et on règle le nombre d'abrasions de l'instrument de mesure sur 400 fois, et on porte la température de l'huile entre 180 et 220°C.
(3) Une fois le test terminé, on retire l'huile alimentaire du récipient de cuisson antiadhésif.
(4) Il est nécessaire de bien vérifier si les fils d'acier sont correctement placé et de manière solide durant le test. Il faut, pour chaque cycle de test, vérifier le niveau d'usure de la surface des fils d'acier, et lorsque ceux-ci présentent une usure manifeste, il faut les réparer ou les remplacer.

### A propos de l'étape D : friture de pommes de terre :

Ingrédients : 300 g de pommes de terre et 500 g d'huile de friture.

### Description concrète de ce test :

(1) On coupe les pommes de terre en forme de frites.
(2) On met 500 g d'huile de friture dans le récipient de cuisson antiadhésif.
(3) On fait chauffer le récipient de cuisson sur une gazinière, une fois que l'huile est suffisamment chaude on y met les frites, et on les fait frire jusqu'à ce qu'elles soient dorées à l'extérieur.
(4) On retire les frites, puis l'huile du récipient de cuisson antiadhésif.

**Tableau 1**

| | L (mm) | B/L | α (°) | H (mm) | Durée de vie du revêtement antiadhésif (nombre de cycles) |
|---|---|---|---|---|---|
| Exemple d'application 1 | 0,3 | 5/12 | 35° | 0,3 | 8 |
| Exemple d'application 2 | 0,6 | 5/12 | 35° | 0,.3 | 10 |
| Exemple d'application 3 | 1 | 5/12 | 35° | 0,3 | 5 |
| Exemple d'application 4 | 0,6 | 1/3 | 35° | 0,3 | 7 |
| Exemple d'application 5 | 0,6 | 1/2 | 35° | 0,3 | 7 |
| Exemple d'application 6 | 0,6 | 5/12 | 25° | 0,3 | 6 |
| Exemple d'application 7 | 0,6 | 5/12 | 45° | 0,3 | 6 |
| Exemple d'application 8 | 0,6 | 5/12 | 35° | 0,12 | 6 |
| Exemple d'application 9 | 0,6 | 5/12 | 35° | 0,45 | 5 |
| Exemple comparatif 1 | 0,1 | 5/12 | 35° | 0,3 | 2 |
| Exemple comparatif 2 | 1,2 | 5/12 | 35° | 0,3 | 1 |
| Exemple comparatif 3 | 0,6 | 1/5 | 35° | 0,3 | 2 |
| Exemple comparatif 4 | 0,6 | 3/4 | 35° | 0,3 | 2 |
| Exemple comparatif 5 | 0,6 | 5/12 | 15° | 0,3 | 2 |
| Exemple comparatif 6 | 0,6 | 5/12 | 60° | 0,3 | 2 |
| Exemple comparatif 7 | 0,6 | 5/12 | 35° | 0,04 | 1 |
| Exemple comparatif 8 | 0,6 | 5/12 | 35° | 0,6 | 2 |

On peut voir d'après la comparaison des données du tableau 1, en procédant à la confrontation des valeurs raisonnables des quatre types de paramètres, que les propriétés de résistance à l'usure du revêtement antiadhésif du récipient de cuisson antiadhésif obtenu selon les exemples d'application 1 à 9 de la présente invention sont de loin supérieures à celles du récipient de cuisson antiadhésif obtenu selon les exemples comparatifs 1 à 8. L'exemple d'application 2 présente les meilleures propriétés. On peut également voir d'après le tableau 1, que le récipient de cuisson antiadhésif obtenu selon les techniques de la présente invention possède une durée de vie accrue.

Les exemples d'applications susmentionnés représentent uniquement les meilleurs exemples d'application de la présente invention ; ils ne restreignent en rien les autres applications de la présente invention. La présente invention peut faire l'objet de diverses modifications et changements par les techniciens des domaines concernés tels que définis par les revendications.

## Revendications

1. Récipient de cuisson antiadhésif comprenant un corps de récipient (10), dans lequel le corps de récipient (10) comporte une surface intérieure nervurée, la surface intérieure nervurée comportant de nombreuses nervures (21) et rainures (22) disposées à intervalles réguliers, un revêtement antiadhésif (30) recouvrant les surfaces des nervures (21) et des rainures (22), les nervures (21) comportant une surface de sommet (211) et une largeur (B) au niveau de la surface de sommet (211) des nervures (21), les rainures (22) comportant une surface de fond (221), l'épaisseur (R) du revêtement antiadhésif (30) sur la surface de fond (221) d'une rainure (22) étant plus importante que la variation d'altitude (V) de la surface du revêtement antiadhésif (30) entre la surface de fond (221) de ladite rainure (22) et la surface de sommet (211) d'une nervure (21) adjacente,
**caractérisé en ce que** l'angle de séparation (a) entre les deux parois latérales (212) d'une même nervure (21) est compris entre 25° et 45°.

2. Récipient de cuisson antiadhésif selon la revendication 1, **caractérisé en ce que** les surfaces de sommet (211) des nervures (21) sont plates ou cambrées et **en ce que** les surfaces de fond (221) des rainures (22) sont plates ou cambrées.

3. Récipient de cuisson antiadhésif selon l'une des revendications 1 ou 2, **caractérisé en ce que** les parois latérales (212) des nervures (21) sont plates ou cambrées.

4. Récipient de cuisson antiadhésif selon l'une des revendications 1 à 3, **caractérisé en ce que** deux nervures (21) voisines sont séparées par un intervalle (L) faisant entre 0,3 mm et 1 mm.

5. Récipient de cuisson antiadhésif selon la revendication 4, **caractérisé en ce que** le rapport entre la largeur (B) des nervures (21) et l'intervalle (L) est compris entre 1/3 et 1/2.

6. Récipient de cuisson antiadhésif selon l'une des revendications 1 à 5, **caractérisé en ce que** la paroi latérale (212) d'une nervure (21) et la surface de fond (221) d'une rainure (22) adjacente sont reliées par une paroi arrondie.

7. Récipient de cuisson antiadhésif selon l'une des revendications 1 à 6, **caractérisé en ce que** la distance verticale (H) séparant le point le plus haut de la surface de sommet (211) d'une nervure (21) et le point le plus bas de la surface de fond (221) d'une rainure (22) est comprise entre 0,12 mm et 0,45 mm.

8. Récipient de cuisson antiadhésif selon l'une des revendications 1 à 7, **caractérisé en ce que** l'épaisseur du revêtement antiadhésif (30) sur la surface de fond (221) d'une rainure (22) est supérieure à l'épaisseur du revêtement antiadhésif (30) sur la surface de sommet (211) d'une nervure (21) adjacente.

9. Récipient de cuisson antiadhésif selon l'une des revendications 1 à 8, **caractérisé en ce que** la distance verticale (H) séparant le point le plus haut de la surface de sommet (211) d'une nervure (21) et le point le plus bas de la surface de fond (221) d'une rainure (22) adjacente est plus importante que la variation d'altitude (V) de la surface du revêtement antiadhésif (30) entre la surface de sommet (211) de ladite nervure (21) et la surface de fond (221) de ladite rainure (22).

10. Récipient de cuisson antiadhésif selon l'une des revendications 1 à 9, **caractérisé en ce que** la distance verticale (H) séparant le point le plus haut de la surface de sommet (211) d'une nervure (21) et le point le plus bas de la surface de fond (221) d'une rainure (22) adjacente est plus importante que l'épaisseur (R) du revêtement antiadhésif (30) sur la surface de fond (221) de ladite rainure (22).

11. Récipient de cuisson antiadhésif selon l'une des revendications 1 à 10, **caractérisé en ce que** l'épaisseur du revêtement antiadhésif (30) est comprise entre 15 µm et 50 µm.

12. Récipient de cuisson antiadhésif selon l'une des revendications 1 à 11, **caractérisé en ce que** la rugosité (Ra) de la surface des nervures (21) est comprise entre 3 µm et 8 µm.

13. Récipient de cuisson antiadhésif selon l'une des revendications 1 à 12, **caractérisé en ce qu'**une couche d'oxydation anodique est disposée entre la surface des nervures (21) et des rainures (22), d'une part, et le revêtement antiadhésif (30), d'autre part.

14. Récipient de cuisson antiadhésif selon l'une des revendications 1 à 13, **caractérisé en ce que** la largeur au niveau de la surface de fond (221) des rainures (22) est supérieure à l'épaisseur du revêtement antiadhésif (30) sur la surface de fond (221) des rainures (22).

## Patentansprüche

1. Antihaftbeschichtetes Kochgefäß, umfassend einen Gefäßkörper (10), wobei der Gefäßkörper (10) eine gerippte Innenoberfläche aufweist, wobei die gerippte Innenoberfläche mehrere Rippen (21) und Rillen (22) aufweist, die in regelmäßigen Abständen angeordnet sind, wobei eine Antihaftbeschichtung (30) die Oberflächen der Rippen (21) und Rillen (22) bedeckt, wobei die Rippen (21) eine Scheiteloberfläche (211) und eine Breite (B) bei der Scheiteloberfläche (211) der Rippen (21) aufweisen, wobei die Rillen (22) eine Bodenoberfläche (221) aufweisen, wobei die Dicke (R) der Antihaftbeschichtung (30) auf der Bodenoberfläche (221) einer Rille (22) größer als die Höhenvariation (V) der Oberfläche der Antihaftbeschichtung (30) zwischen der Bodenoberfläche (221) der Rille (22) und der Scheiteloberfläche (211) einer angrenzenden Rippe (21) ist,
**dadurch gekennzeichnet, dass** der Trennwinkel (a) zwischen den zwei Seitenwänden (212) einer selben Rippe (21) zwischen 25° und 45° beträgt.

2. Antihaftbeschichtetes Kochgefäß nach Anspruch 1, **dadurch gekennzeichnet, dass** die Scheiteloberflächen (211) der Rippen (21) flach oder gebogen sind, und dass die Bodenoberflächen (221) der Rillen (22) flach oder gebogen sind.

3. Antihaftbeschichtetes Kochgefäß nach einem der Ansprüche 1 oder 2, **dadurch gekennzeichnet, dass** die Seitenwände (212) der Rippen (21) flach oder gebogen sind.

4. Antihaftbeschichtetes Kochgefäß nach einem der Ansprüche 1 bis 3, **dadurch gekennzeichnet, dass** zwei benachbarte Rippen (21) durch einen Abstand (L), der zwischen 0,3 mm und 1 mm beträgt, voneinander getrennt sind.

5. Antihaftbeschichtetes Kochgefäß nach Anspruch 4, **dadurch gekennzeichnet, dass** das Verhältnis zwischen der Breite (B) der Rippen (21) und dem Abstand (L) zwischen 1/3 und 1/2 liegt.

6. Antihaftbeschichtetes Kochgefäß nach einem der Ansprüche 1 bis 5, **dadurch gekennzeichnet, dass** die Seitenwand (212) einer Rippe (21) und die Bodenoberfläche (221) einer angrenzenden Rille (22) durch eine abgerundete Wand miteinander verbunden sind.

7. Antihaftbeschichtetes Kochgefäß nach einem der Ansprüche 1 bis 6, **dadurch gekennzeichnet, dass** der vertikale Abstand (H), der den obersten Punkt der Scheiteloberfläche (211) einer Rippe (21) und den untersten Punkt der Bodenoberfläche (221) einer Rille (22) trennt, zwischen 0,12 mm und 0,45 mm liegt.

8. Antihaftbeschichtetes Kochgefäß nach einem der Ansprüche 1 bis 7, **dadurch gekennzeichnet, dass** die Dicke der Antihaftbeschichtung (30) auf der Bodenoberfläche (221) einer Rille (22) größer als die Dicke der Antihaftbeschichtung (30) auf der Scheiteloberfläche (211) einer angrenzenden Rippe (21) ist.

9. Antihaftbeschichtetes Kochgefäß nach einem der Ansprüche 1 bis 8, **dadurch gekennzeichnet, dass** der vertikale Abstand (H), der den obersten Punkt der Scheiteloberfläche (211) von einer Rippe (21) und den untersten Punkt der Bodenoberfläche (221) einer angrenzenden Rille (22) trennt, größer als die Höhenvariation (V) der Oberfläche der Antihaftbeschichtung (30) zwischen der Scheiteloberfläche (211) der Rippe (21) und der Bodenoberfläche (221) der Rille (22) ist.

10. Antihaftbeschichtetes Kochgefäß nach einem der Ansprüche 1 bis 9, **dadurch gekennzeichnet, dass** der vertikale Abstand (H), der den obersten Punkt der Scheiteloberfläche (211) von einer Rippe (21) und den untersten Punkt der Bodenoberfläche (221) einer angrenzenden Rille (22) trennt, größer als die Dicke (R) der Antihaftbeschichtung (30) auf der Bodenoberfläche (221) der Rille (22) ist.

11. Antihaftbeschichtetes Kochgefäß nach einem der Ansprüche 1 bis 10, **dadurch gekennzeichnet, dass** die Dicke der Antihaftbeschichtung (30) zwischen 15 µm und 50 µm liegt.

12. Antihaftbeschichtetes Kochgefäß nach einem der Ansprüche 1 bis 11, **dadurch gekennzeichnet, dass** die Rauheit (Ra) der Oberfläche der Rippen (21) zwischen 3 µm und 8 µm liegt.

13. Antihaftbeschichtetes Kochgefäß nach einem der Ansprüche 1 bis 12, **dadurch gekennzeichnet, dass** eine anodische Oxidationsschicht zwischen der Oberfläche der Rippen (21) und der Rillen (22) einerseits und der Antihaftbeschichtung (30) andererseits angeordnet ist.

14. Antihaftbeschichtetes Kochgefäß nach einem der Ansprüche 1 bis 13, **dadurch gekennzeichnet, dass** die Breite bei der Bodenoberfläche (221) der Rillen (22) größer als die Dicke der Antihaftbeschichtung (30) auf der Bodenoberfläche (221) der Rillen (22) ist.

## Claims

1. Non-stick cooking container comprising a container body (10), wherein the container body (10) comprises a ribbed inner surface, the ribbed inner surface comprising many ribs (21) and grooves (22) arranged at regular intervals, a non-stick coating (30) covering the surfaces of the ribs (21) and of the grooves (22), the ribs (21) comprising a top surface (211) and a width (B) at the top surface (211) of the ribs (21), the grooves (22) comprising a bottom surface (221), the thickness (R) of the non-stick coating (30) on the bottom surface (221) of a groove (22) being greater than the variation in altitude (V) of the surface of the non-stick coating (30) between the bottom surface (221) of said groove (22) and the top surface (211) of an adjacent rib (21),
**characterised in that** the separation angle (α) between the two lateral walls (212) of the same rib (21) is between 25° and 45°.

2. Non-stick cooking container according to claim 1, **characterised in that** the top surfaces (211) of the ribs (21) are flat or cambered and **in that** the bottom surfaces (221) of the grooves (22) are flat or cambered.

3. Non-stick cooking container according to any of the claims 1 or 2, **characterised in that** the lateral walls (212) of the ribs (21) are flat or cambered.

4. Non-stick cooking container according to any of the claims 1 to 3, **characterised in that** two neighbouring ribs (21) are separated by an interval (L) that is between 0.3 mm and 1 mm.

5. Non-stick cooking container according to claim 4, **characterised in that** the ratio between the width (B) of the ribs (21) and the interval (L) is between 1/3 and 1/2.

6. Non-stick cooking container according to any of the claims 1 to 5, **characterised in that** the lateral wall (212) of a rib (21) and the bottom surface (221) of an adjacent groove (22) are connected by a rounded wall.

7. Non-stick cooking container according to any of the claims 1 to 6, **characterised in that** the vertical distance (H) separating the highest point of the top surface (211) of a rib (21) and the lowest point of the bottom surface (221) of a groove (22) is between 0.12 mm and 0.45 mm.

8. Non-stick cooking container according to any of the claims 1 to 7, **characterised in that** the thickness of the non-stick coating (30) on the bottom surface (221) of a groove (22) is greater than the thickness of the non-stick coating (30) on the top surface (211) of an adjacent rib (21).

9. Non-stick cooking container according to any of the claims 1 to 8, **characterised in that** the vertical distance (H) separating the highest point of the top surface (211) of a rib (21) and the lowest point of the bottom surface (221) of an adjacent groove (22) is greater that the variation in altitude (V) of the surface of the non-stick coating (30) between the top surface (211) of said rib (21) and the bottom surface (221) of said groove (22).

10. Non-stick cooking container according to any of the claims 1 to 9, **characterised in that** the vertical distance (H) separating the highest point of the top surface (211) of a rib (21) and the lowest point of the bottom surface (221) of an adjacent groove (22) is greater than the thickness (R) of the non-stick coating (30) on the bottom surface (221) of said groove (22).

11. Non-stick cooking container according to any of the claims 1 to 10, **characterised in that** the thickness of the non-stick coating (30) is between 15 µm and 50 µm.

12. Non-stick cooking container according to any of the claims 1 to 11, **characterised in that** the roughness (Ra) of the surface of the ribs (21) is between 3 µm and 8 µm.

13. Non-stick cooking container according to any of the claims 1 to 12, **characterised in that** an anodic oxidation layer is arranged between the surface of the ribs (21) and of the grooves (22), on the one hand, and the non-stick coating (30), on the other hand.

14. Non-stick cooking container according to one of claims 1 to 13, **characterised in that** the width at the bottom surface (221) of the grooves (22) is greater than the thickness of the non-stick coating (30) on the bottom surface (221) of the grooves (22).
